# EUROPEAN PATENT SPECIFICATION

(11) **EP 1 547 016 B1**
(45) Date of publication and mention of the grant of the patent: **21.03.2007**
(21) Application number: 03798272.5
(22) Date of filing: 12.09.2003
(51) Int. Cl.: G06T 9/00

(54) **METHOD AND APPARATUS FOR ENCODING IMAGE AND OR AUDIO DATA**
VERFAHREN UND VORRICHTUNG ZUR CODIERUNG VON BILD- UND/ODER AUDIODATEN
PROCEDE ET DISPOSITIF DE CODAGE DE DONNEES IMAGE ET/OU AUDIO

(30) Priority: 28.09.2002 GB 0222562
(43) Date of publication of application: 29.06.2005
(73) Proprietor: Koninklijke Philips Electronics N.V., 5621 BA Eindhoven (NL)
(72) Inventor: CALDWELL, Richard J., Philips Intel. Prop. & Std., Redhill, Surrey RH1 5HA (GB)
(74) Representative: Damen, Daniel Martijn
(86) International application number: PCT/IB2003/003969
(87) International publication number: WO 2004/029879

(56) References cited:
- EP-A- 0 998 146
- EP-A- 1 168 651
- US-A1- 2001 010 707
- FLETCHER J: "ISO/MPEG LAYER 2 OPTIMUM RE-ENCODING OF DECODED AUDIO USING A MOLE SIGNAL" PREPRINTS OF PAPERS PRESENTED AT THE AES CONVENTION, XX, XX, May 1998 (1998-05), pages 1-15,A-E, XP000997517

## Description

The invention relates to method and apparatus for encoding of data received from a source, wherein the encoding is of a type which imposes a structure on the data, which structure is not defined in the data as received. The invention finds particular application in block-based compression of digitised image or audio data derived from analogue sources, for example using MPEG encoding.

As is well known, images, and particularly motion picture sequences for television and video recording applications, can be transmitted and stored in either analogue or digital formats. Digital transmission and storage is becoming increasingly practicable, both for professional and consumer applications. It is commonly necessary to digitise and encode images from analogue sources for transmission or storage, and *vice versa.* These may be still images, such as those generated in digital photography or scanned from a film or paper, or a stream of images forming a motion picture sequence. Digital video from a camera or recording may be converted to analogue form for broadcast and then converted to digital form again for storage, such as on a domestic digital video recorder (DVR) apparatus.

Digital transmission and storage systems generally use block-based compression, such as JPEG or MPEG-2, to achieve acceptable image quality within the available transmission bandwidth and storage capacity. JPEG is a video compression system based upon performing Discrete Cosine Transformation (DCT) on groups, or blocks, of pixel data. MPEG-2 is a motion video compression system based upon the same principles. To achieve substantial data compression, the DCT coefficients representing each block of pixels are subjected to adaptive quantisation and Variable Length Encoding (VLE). Blocks are also grouped together in fours, to form "Macroblocks", so that chrominance (colour) components can be represented with half the spatial resolution provided for luminance (brightness) component. These techniques can be applied in both still images (JPEG) and motion video (MPEG). For moving pictures, motion-compensated inter-frame predictive encoding is performed on a macroblock basis, to achieve further compression.

Due to the quantisation, these compression systems are "lossy" systems, whereby encoded data, after decoding, is not identical to the original data before encoding. This may manifest itself as differences in pixel luminance and/or chrominance, all generally appearing as noise in the reconstructed image. A particularly noticeable form of noise in block-based compression systems such as JPEG and MPEG, is the appearance of discontinuities in pixel colour and/or brightness across the block boundaries. These artefacts will be referred to herein as "block noise". The human eye is very sensitive to abrupt changes in contrast such as this, the appearance occurring in the form of a grid-like pattern superimposed upon a normal, moving image. EP 0998146 A for example describes apparatus for detecting block noise and smoothing the discontinuities at the block boundaries, to minimise the obtrusiveness of the block boundaries in the viewed image.

Compression encoders generally implement a continuous trade-off between image quality and transmission bandwidth or file size. The picture quality available depends heavily on the content and also the quality of the source image. Noise in the source image leads to a marked deterioration in quality, as the random features are inherently more costly to represent than the more coherent signals for which the system is designed. On the other hand, repeatedly decoding and then re-coding images that have been encoded by these methods does not necessarily result in greater degradation, because the remaining information is already adapted to what the re-encoding process can reproduce within the available bandwidth. Although the image being re-encoded may contain noticeable block noise, for example, because each block is treated separately by the DCT process, these artefacts may be reproduced in the re-encoded image, but they will not be compounded, nor consume any additional bandwidth, as they are effectively "invisible" to the re-encoder.

The inventor has recognised a problem, however, where decoded images containing block noise are transmitted or stored in analogue form, and are then supplied to the encoder for digital transmission or storage. In this case, there will generally be no alignment between the block noise artefacts present in the source image and the block boundaries applied by the encoder. Accordingly, the encoder will "see" the block noise as part of the signal to be encoded. Then, not only will the block noise be reproduced in the encoded image, the bandwidth required to represent these sharp discontinuities within the encoder's pixel blocks will reduce the bandwidth available to represent the true image content, leading to a marked degradation in image quality. On decoding the image, two sets of block noise will be included, and any further transmission by an analogue channel and re-encoding will compound the problem further.

When handling motion video, according to a block-based encoding method such as MPEG-2, a sequence of frames is encoded as a notional Group Of Pictures (GOP) employing differing coding schemes. The schemes typically comprise intra-coding "I" frames which are coded only using information from itself (similar to JPEG), predictive coding "P" frames which are coded using motion vectors based on a preceding I-frame ; and bi-directional predictive coding "B" frames, which are encoded by prediction from I and/or P frames before and after them in sequence. The choice of coding schemes and the order in which they are sequenced depends upon the integrity of the communication medium being used to convey the motion video. For example, if there is a high risk of corruption, it may be decided to repeat a greater number of "I" frames in a GOP than would be used for a more secure link, so that upon interruption an image can quickly be reconstructed.

Ideally, to achieve greatest compression and minimise degradation through decoding and re-coding steps, the same GOP sequence would be used by all encoding stages. EP 1069779 A seeks to send "history" data with digital video signals, so that re-encoding can be performed with regard to the GOP structure of a predecessor data stream. Again, however, if the pictures have been through the analogue domain in the meantime, such history data is not available. When this happens, frames that were originally I-frames may subsequently be encoded as B- or P-frames, and frames that were originally B- or P-frames may subsequently be encoded as an I-frame. This will generally result in a loss of picture quality, which would be compounded if the decoding and re-coding process were repeated.

Similar issues arise in the encoding of audio data from an analogue source, which may have been compressed previously. For example, many audio compression systems divide the audio sample stream into short blocks similar to blocks of pixels but in one dimension only, and encode each block in terms of its spectral content. In this case, the blocks represent temporal structure rather than spatial structure, but the presence of block boundary artefacts, and the problems of bandwidth stealing give rise to analogous problems to those described above. J. Fletcher: "ISO/MPEG Layer 2 - Optimum re-encoding of decoded audio using a MOLE signal", Preprints Of Papers Presented At The AES Convention , (05-1998) proposes the use of additional signals to convey structural information about an audio signal, so that they can be encoded with minimal degradation between decoding and re-encoding steps. US-A-2001010707 and EP-A-1168651 are further documents proposing to use parameters retained from a decoding step to facilitate re-encoding with less degradation.

Accordingly, it is an object of the invention to provide improved methods and apparatus for performing block-based encoding data such as images and sounds derived from analogue sources, particularly methods that can preserve the quality of images/sounds that have been previously block-based encoded and contain block noise or other structured artefacts.

According to a first aspect of the present invention, there is provided a method of encoding of data received from a source, wherein the encoding is of a type which imposes a structure on the data, which structure is not defined in the data as received, the method comprising the steps of:-
- analysing the received data to detect artefacts contained within the data indicating that the data has been through a previous encoding and decoding process of the same type;
- extracting by analysis of said artefacts information as to the structure imposed on the data by said previous encoding process;
- encoding the received data while referring to the extracted structure information so as to align at least some features of the structure imposed by the encoding being performed with those imposed by the previous encoding structure.

The encoding step may be performed so as to maximise alignment between the structure imposed by the encoding process and that imposed by the previous encoding process.

As will be seen from the following examples, using the same structure as was used before allows images or audio data to propagate through a system involving multiple encoding/decoding stages with reduced degradation of quality. A particular advantage is avoiding consumption of bandwidth by the unnecessary encoding of artefacts from the previous encoding process.

Where the received data represents an image, such as an image received through an analogue transmission or storage process, the structure imposed by the encoding process may include a spatial structure in which pixels of the image are processed in blocks, the encoding being performed so as to align block boundaries of the encoding process substantially with block boundary artefacts present in the received image data as a consequence of the previous encoding process.

The encoding process may be of a type which imposes a spatial structure in which the blocks of pixels are grouped into macroblocks. In such a case, the encoding may be performed so as to align macroblock boundaries of the encoding process substantially with macroblock boundary artefacts present in the received image data as a consequence of the previous encoding process. In JPEG- or MPEG-derived image data, macroblock boundary artefacts can be detected only in the chrominance components of the image data, as opposed to the luminance data. The term "block" should be interpreted as including "macroblock", except where the context requires otherwise.

In cases where the relative resolution between chrominance and luminance components of the image is not fixed in advance, the detection of block boundary artefacts separately in chrominance and luminance components will also allow determining the relative resolution as a preliminary step. This can then be used to set up the encoder with the same parameters, alternatively or (preferably) in addition to aligning the block boundaries in the manner described above.

The received image data may (additionally) be a motion picture sequence of images. In this case, the structure information used for each successive image may be derived entirely by analysis of the present image, entirely from a previous image, or from a combination of previous and present images. These embodiments can be selected according to the circumstances. The first option allows for jitter in the structure from frame to frame, but may have difficulty in identifying the structure where the content of the image data is such that it lacks strong artefacts in a given frame (such as a blank image between scenes). The second option can avoid this problem, while still allowing the encoder to adapt to a slower drift in the structure of the artefacts relative to the received image data.

The step of analysing the received data may include storing all or at least a substantial part of an image and performing spectral analysis to identify periodic components indicating the presence of block boundary artefacts. The step of extracting structure information may comprise analysing said image to determine the spacing (frequency) and location (phase) of those artefacts. If the image data is stored for analysis in an image store, the spectral analysis may comprise applying a Fast Fourier Transform (FFT) to the stored data.

The encoding step may be performed by separate steps of pre-processing the data to produce data having a standardised structure. This allows a generic encoding process (software and/or hardware) to be applied without modification. For example, in an MPEG encoding process the encoder generally applies a block/macroblock structure of 8x8/16x16 pixels, starting at the top left pixel of the image. Said pre-processing step may be performed by re-sampling the image data entirely in the digital domain. Filtering may be applied to interpolate pixel values for this purpose. The received image data may be over-sampled when initially digitised from the analogue, to minimise loss of quality in this re-sampling step.

The re-sampling may be performed on an entire image before encoding begins, or it may be performed during read-out of pixel data for encoding.

Where the received image data represents a motion picture sequence, the structure imposed by the encoding process may be a temporal structure (GOP structure) in which different images of the sequence are processed differently, the encoding being performed so as to apply substantially the same GOP structure to the sequence as was applied in the previous encoding process. Alternatively, the encoding may be performed so as to apply a different GOP structure to, but temporally associated with, that used in the previous encoding process. In particular, the analysis of artefacts may distinguish between intra- and inter-coded pictures.

The analysis of GOP structure may be performed by analysing several images stored in full in a memory, or it may be performed by preserving only parameters of past images and analysing the present image with respect to those parameters. It may be that the GOP structure is only recognised after analysing several frames of the sequence. Intra-coded pictures will typically arise on a fairly regular basis and contain more high-frequency components, and can be identified in this way. Note that the DCT apparatus of the encoding process could be used to measure the high frequency components. On the other hand, it may be simpler to provide separate filters for this purpose, to retain the generic encoder and to reduce design effort and uncertainty. The designer can choose whether to delay encoding until the GOP structure has been determined, or to encode initially without reference to the GOP structure. If desired, alignment of the structures could begin when sufficient information becomes available. Clearly the latter option will be preferred, especially when feeding TV transmissions for simultaneous display, where video segments with and without coding artefacts may be freely edited together.

The received data may alternatively comprise audio data. The structure imposed by the encoding process may include a temporal structure in which samples of an audio signal are processed in blocks, each representing a short time interval, the encoding being performed so as to maximise alignment of block boundaries of the encoding process substantially with block boundary artefacts present in the received audio data as a consequence of the previous encoding process. The principles applied in the embodiments of image processing described above and below can be adapted generally to the audio encoding process. One difference is that audio data is one-dimensional and continuous, rather than two-dimensional data organised in separate image frames that can be processed, if desired, in isolation from one another. The methods adopted for an audio stream will therefore be of the continuous variety in which the existence and position of artefacts will be detected on an on-going basis and the encoding step will be adapted on an on-going basis to maximise alignment of the block boundaries over time, rather than in every part of the data stream.

In the case of audio data, therefore, the analysis step may include a phase-locked loop (PLL) process which is attuned to detect and then lock on to block boundary artefacts in a continuous data stream. The encoding step may then include a second phase-locked loop or similar process for maximising alignment of the block boundaries of the encoding process with the detected block boundary artefacts gradually over time, to avoid sudden discontinuities in the block structure imposed by the encoding step.

The invention further provides an apparatus for encoding data, the apparatus being adapted to implement the method according to the invention as set forth above.

The apparatus may comprise a digital video recorder or digital audio recorder, as appropriate.

As mentioned above, the invention may be implemented using pre-processing and a generic encoding process or processing apparatus.

Accordingly, the invention yet further provides a method of pre-processing data received from a source, for subsequent application to an encoding process which imposes a predetermined structure on the data, which structure is not defined in the data as received, the method comprising the steps of:-
- analysing (300) the received data to detect artefacts contained within the data indicating that the data has been through a previous encoding process of imposing a structure having features in common with said predetermined structure;
- extracting by analysis of said artefacts information as to the structure imposed on the data by said previous encoding process;
- processing (630) the received data while referring to the extracted structure information so as to align at least some features between the structure imposed by the previous encoding process and said predetermined structure.

A consumer having generic encoding equipment or software can then in principle add-on the pre-processing capability. The pre-processing could also be performed by broadcaster prior to transmitting the data as a digital TV or audio broadcast signal, such that subscribers having generic encoding equipment can benefit from the invention without investment on their part.

The particular embodiments described above can be applied in this form of method. A pre-processing apparatus is similarly provided.

The invention yet further provides a computer program product comprising instructions for causing a programmable computer to implement the specific method steps and/or apparatus features of the invention in any of its aspects as set forth herein. The computer program product may be supplied independently of any computer hardware, and may supplied either in the form of a record carrier or in electronic form over a network.

Embodiments of the invention will now be described, by way of example only, by reference to the accompanying drawings, in which:
Figure 1 depicts an original image having smooth edges, prior to block-based encoding;
Figure 2 depicts the image of Figure 1 after lossy block-based encoding;
Figure 3 shows block noise prevalent in the real image that was depicted in Figure 2.
Figure 4 illustrates a typical system having a number of encoding and subsequent decoding stages for transmitting analogue motion video from source to user across communication links having restricted bandwidth;
Figure 5 illustrates the effect on block boundaries of an image having passed through the various stages (A, B, C) of the system of Figure 4;
Figure 6 illustrates an improved encoder of the present invention for detecting encoding parameters, for subsequent use in block-based encoding;
Figure 7 is a block diagram of the Boundary Edge Detector of the encoder of Figure 6;
Figure 8 shows some detectable boundaries that might exist in a typical block-based encoded image;
Figure 9 shows the detectable boundaries of Figure 8 that the Boundary Edge Detector of Figure 7 has interpolated between to form an encoding grid; and
Figure 10 shows derivation of pixel clock from detected and interpolated block boundaries.

It has, and will remain to be, a goal of designers of image processing systems to minimise the quantity of noise introduced into a signal as it progresses through the system.

Various techniques exist for the suppression of noise within a video image, before display. For example, a low-pass filter will reduce the abruptness of any high-frequency (and therefore noticeable) transitions, making the image more visually acceptable. However, doing so will also reduce the bandwidth of the entire image, resulting in a less sharp and therefore degraded image.

Alternatively, it is preferred to minimise the generation of noise itself, rather than to try to suppress it once it has entered the system. Various screening techniques currently exist to minimise a system picking up noise, but it is more of a challenge to minimise the generation of noise by the system itself. Image compression using block-based encoding actually self-generates an amount of noise, which can propagate and in certain circumstances be accentuated as the signal progresses through the system.

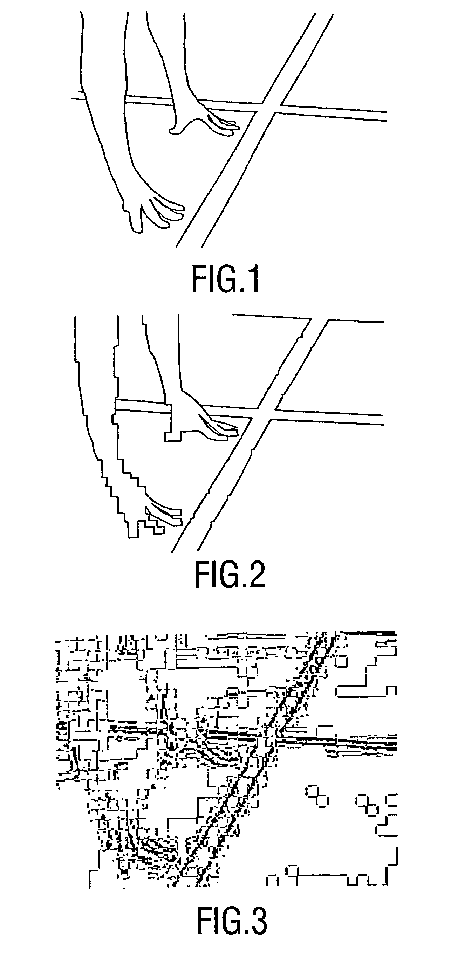

Figure 1 depicts a derived image prior to block-based encoding. The lines depict regions of high contrast change. Lines and curves are smooth. (The original image from which this was derived also exhibited a wide dynamic tonal range).

Figure 2 depicts the image of Figure 1 after it has been compressed to a reduced file size, using block based encoding such as JPEG. As before, the lines depict points of high contrast. The skilled reader will appreciate that if the image was one selected from a motion video sequence then the compression used may have been MPEG encoding. Because the encoding scheme is "lossy", a number of artefacts have been introduced into the image. For example, sharp objects now protrude into the lines. The smooth lines have been replaced by jagged edges.

The wide tonal range of the original image would be replaced by small square blocks of uniform tone (not shown). As a result, a smooth transition of tone across a selected area is now replaced by steps of different uniform tonal values. Some of the steps between blocks are of sufficiently large difference to be noticeable within the image.

Figure 3 is the image depicted by Figure 2, after being processed by an edge detector. This image was derived by detecting points of high contrast between adjacent pixels. If the process was performed on the original image as depicted by Figure 1 then it would be fairly similar to the Figure 1 as shown. However, when performed on the image that has been block-based encoded, as depicted by Figure 2, in addition to the base image one can observe clearly defined blocks of equal size and shape. The blocks reiate to pixel groups of 8 by 8 pixels, and are know as "Block Noise", because it occurs at detectable transitions between blocks.

A block-based compression scheme reduces the size of an image file (and/or the bandwidth required to transmit the image across a limited-bandwidth carrier) by separately encoding regions within the image. Each block is processed to eliminate components of the signal that are not essential for conveying the image (generally high frequencies). A motion sequence is further compressed by only transmitting image data that has changed relative to the previous frame. Cumulative errors are reduced by sending a fresh, reference frame at regular intervals. The means by which motion video is processed are described later.

The blocks within each image are visible because reconstruction for display of each pixel within each block is now only an approximation of its original value. This is because some of the data used to reconstruct the block has been discarded by the encoding process. The greater the compression selected, the greater the resultant approximation of each pixel value within the block. Adjacent blocks will become visible because the smooth gradation between pixels in the original image has been replaced by steps between pixel values. Varying deviation of pixel value about its original value contributes to making the steps more visible.

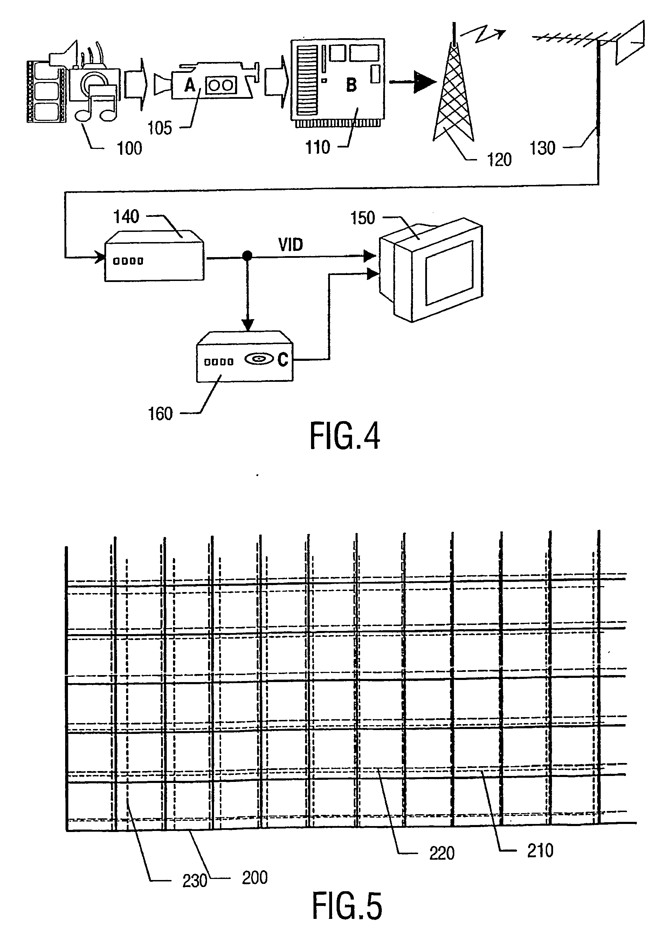

Figure 4 illustrates a typical video production, processing and distribution system. A multimedia source 100 is filmed 105, and passed to studio 110 for processing. The video is subsequently transmitted 120 and received 130 within a domestic environment, for decoding 140 and display 150. Optionally, the video can be recorded 160 for later viewing. The system includes a number of block-based encoding and subsequent decoding stages (A, B, C) for transmitting motion video within the system across communication links having restricted bandwidth.

In the example shown, the multimedia source 100 is filmed by an outside broadcast unit and the resultant analogue video recorded onto video tape. The video recorder uses MPEG encoding to compress the video, to provide sufficient recording time using a small cassette. This is the first stage (A) of block-based encoding in the example system. The videotape 105 is then transferred to the studio 110, where it is decoded back into analogue video. At this point a number of artefacts are introduced into the analogue video, as a result of the inefficiencies of the prior encoding and subsequent decoding process.

Once the video has been processed by the studio, for example by mixing with other multimedia content, the signal is transmitted 120 to the consumer 130. The transmission involves a further stage (B) of block-based encoding, such as MPEG-2, as the bandwidth of each transmission channel may be restricted. The consumer receives the signal, which is then decoded 140 to provide analogue video VID for display by a monitor 150. The consumer may wish to record the video being displayed on the monitor, and has a cassette-less recording device 160, such as one using a hard drive to store digitised video. Video VID is compressed once again (C) using block-based encoding, to maximise the capacity of the hard drive. When subsequently displayed, the video is played back and decoded in similar fashion to the previous two stages.

The video information passing through this system has to pass through three stages (A, B, C) of block-based encoding and subsequent decoding, where the signal is conveyed between stages in analogue form. As a result of using analogue video, no information is passed between stages that would allow at each encoding stage the pixels of the same image to be encoded according to the same rules, and therefore in exactly the same manner as for previous encoding stages.

Figure 5 illustrates the effect on block boundaries of an image having passed through the various stages (A, B, C) of the system of Figure 4. The unbroken 200 lines denote the block boundaries used by the first encoding/decoding stage. The dashed lines 210, 220 and 230 denote the block boundaries used by the subsequent encoding/decoding stages. One can observe that the block boundaries are located differently within the image frame. This is because the locations of the block boundaries are dictated by various factors, such as clock speed, image size and image offset. Variances in timebase such as those caused by video tape recorder tape transport mechanisms environmental factors such as temperature may cause the boundaries to move relative to each other over a period of time, when the analogue signals are digitised.

The consequence of these varying boundaries is a reduction in quality of the images within the image sequence. This is because block boundary artefacts introduced in previous stages of block-based encoding/decoding 200 are then treated as meaningful image content data in any successive encoding stages.

In seeking to solve the problem, the inventor has observed that encoding an analogue image using the same block and pixel structure as was used in a previous encoding stage renders the block boundary artefacts effectively invisible to the encoder, which treats each block of pixels substantially as an independent unit. This significantly improves the quality of the images without impact upon bandwidth requirements, because artefacts introduced at the first stage of encoding will not consume bandwidth by being treated as image content by further encoding stages.

The inventor has further found that it is possible to analyse an analogue image to determine whether or not it has been previously encoded using a block-based image compression system and use results of the analysis to direct the encoding process.

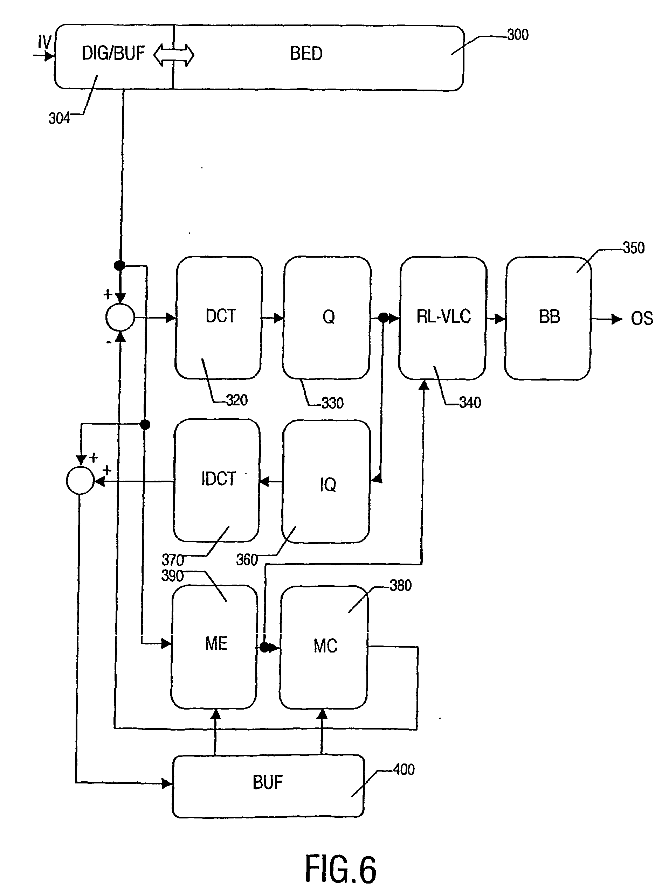

Figure 6 illustrates an improved encoder, performing the two principal functions of a) analysing the input analogue video IV to detect the encoding parameters used in a previous encoding stage, such as block and pixel boundaries and pixel clock, and b) using the detected encoding parameters to direct the block-based encoding of the input video.

A Boundary Edge Detector BED 300, is used for analysing input analogue video to determine the encoding parameters such as horizontal "H" and vertical "V" block boundaries within each image, and from these boundaries deriving a pixel clock "CLK" that directly corresponds to the locations of pixels within each block. Attempts have been previously made to analyse analogue video to suppress block noise, an example of which is illustrated in EP 0998146A. The detectable horizontal and vertical block boundaries within a previously block-encoded video frame are used to suppress the block noise, but only adjacent these detected boundaries.

The Boundary Edge Detector BED 300 includes a digitisation and storage front end DIG/BUF 304, which is accessed both for analysis to determine the boundary edges, and as a source of digital video data for the block-based encoder.

In an embodiment where the controller also detects GOP structure from artefacts in the received image data, then the controller may also direct the encoder to impose a corresponding GOP structure on the new encoding. The GOP structure would be conveyed via an interface between the BED and the encoders controller (not shown). Alternatively, however, the information as to GOP structure may be used to influence the encoder as to GOP structure or quantisation strength, but not to dictate rigidly a GOP structure for the encoding process. MPEG encoding processes tend to require freedom to select the GOP structure, for example, to control bandwidth.

The processing stages of the encoder comprise conventional stages of a block-based encoder; these being Discrete Cosine Transform (DCT) 320, Quantisation (Q) 330, Run-Length Variable Length Encoder (RL-VLC) 340, Bitstream Buffer (BB) 350, Inverse Quantisation (IQ) 360, Inverse Discrete Cosine Transform (IDCT) 370 Motion Compensator (MC) 380, Motion Estimation (ME) 390, and frame memory buffer (BUF) 400. The output stream OS is taken from the Bitstream Buffer BB 350, and corresponds to a stream of block-based encoded video data.

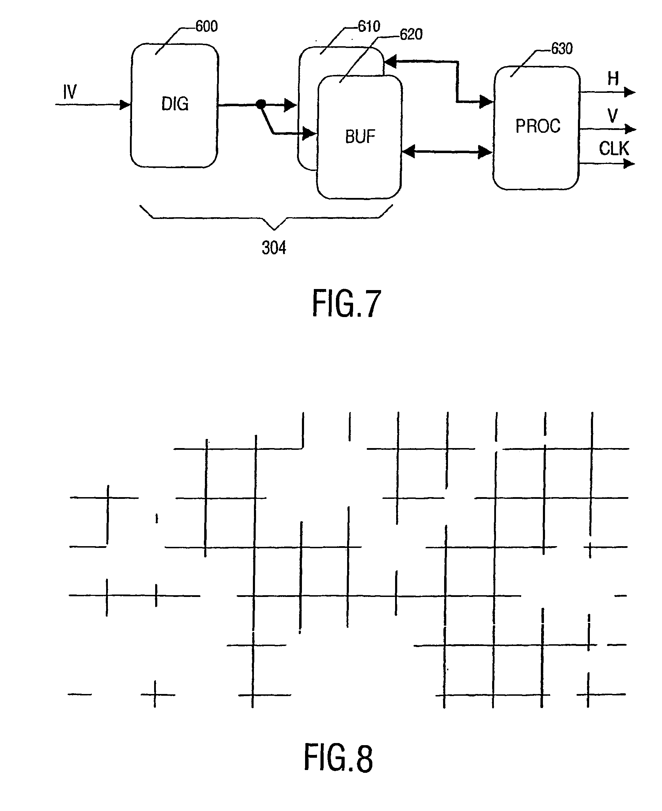

Figure 7 is a block diagram of a digital Boundary Edge Detector BED 300, where the images are digitised DIG 600, double-buffered by memories BUF 610, 620, and processed by processor PROC 630 to derive block boundaries H, V and a pixel CLK. The processor could be a DSP, or FPGA solution.

The skilled person will appreciate that various techniques can be used to analyse the image data to obtain the block boundary artefacts, including for example techniques explained in detail in EP 0998146A, mentioned in the introduction. In the improved encoder of the first embodiment, the detected boundaries H and V and pixel clock CLK are specifically used to standardise the structure of the image to one compatible with the encoder. The encoder does not perform suppression of block noise adjacent to the boundaries. Instead, by employing an image store and boundary edge detector, it ensures that the encoding is performed using the same boundaries as were used before. Doing so ensures that each block is encoded using the same boundaries as the image progresses though different encoding stages, eliminating the encoding of block boundaries as image data. The skilled person will, however, appreciate that this does not exclude introducing additional means for suppressing block noise in a further embodiment.

The encoding stage is a conventional block-based encoder, such as one for performing MPEG encoding of motion video. The encoder will be selectable to operate according to different display standards, such as VGA, or SVGA, although a further embodiment may include auto detection of the video standard from a wide range of input video standards by analysis of the timing influenced by the timing signals derived by the detection of block boundaries and derivation of pixel clock.

Each frame of input video will contain a number of detectable boundaries that Boundary Edge Detector BED 300 will be able to detect and use to derive all boundary edges.

Figure 8 illustrates detectable boundaries within a single image frame. One can observe that gaps are present that thwart detection of a full grid. In the disclosure of European Patent EP 0998146A described above, it does not matter if the boundaries cannot be detected in these regions, because there is no block noise within the gaps that need to be suppressed and therefore there is no need to derive a full grid. However, a full grid is required in the embodiments of the improved encoder because precise timing is required for all blocks and pixels within each video frame.

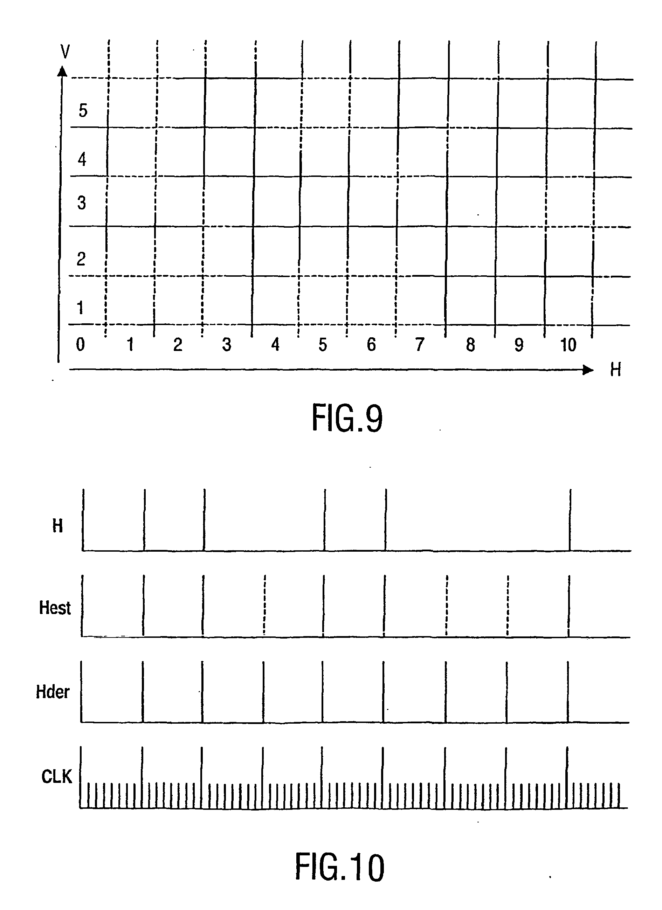

Figure 9 shows the image of Figure 8, where the Boundary Edge Detector of Figure 7 has interpolated between the detectable boundaries (depicted by the dashed lines) to form an encoding grid.

The digital BED 300 illustrated in Figure 7 digitises the analogue image at a suitable rate and stores it in a frame store. In accordance with Nyquist theory, the digitisation rate may be in the order of two times the image bandwidth, or higher, depending upon the accuracy required by the BED to correctly determine the true location of block boundaries within the image. The image is then processed (either as it is being loaded into memory, or once a complete frame has been stored) to derive the block structure. Methods for achieving this are well known, and include weighted filter kernels (small arrays of coefficients) that are passed over the image. Double buffering may be applied as appropriate, to maintain continuity. In that case, as one buffer is being processed to derive the block and pixel structure, another is being loaded with the next frame. The buffers switch at frame or field rate, depending upon the video standard being processed. The pixel clock is provided by a frequency synthesiser, controlled by the processor and derived from the measured block structure.

Figure 10 shows the detectable horizontal boundaries (H), the estimated location for the undetectable boundaries (Hest), the boundaries derived for subsequent processing (Hder) and the pixel clock CLK, which is output from the processor,630 and corresponds to the pixels within each frame of input video. This clock is derived by digital synthesis within the digital processor core 630, although other methods are available. A small degree of variance is acceptable, provided that the clock does not stray close to pixel boundaries, where the setup and hold timing of the encoder video digitiser may become compromised.

The three derived horizontal boundary H, vertical boundary V and pixel clock timing CLK are used by the processor to align the block boundaries of the new encoding process with those used in the previous stage. They are used as base timing signals from which all other of the BED 300 timing signals are derived. Therefore, as the input video's base timing changes (for example, due to wow and flutter of a video tape during playback, or changes over a longer period of time), the timing of the processing will alter to suit, tracking the input timing on a continuous basis.

The image is prepared for encoding by modifying the pixel structure to align with the derived boundaries. This can be achieved in a number of ways, such as by applying a "Warp" function that re-samples the image using non-linear pixel mapping; or by modifying the read addressing when extracting data from the framestore to pass to the encoder. The skilled person will appreciate that the same result could be achieved by pre-processing during storage, by modifying the digitisation rate and/or write addressing parameters.

Significant changes in input timing, for example that caused by interruption of the video signal, would introduce a small transition period for settling, during which the timing is unlikely to be accurate and precise overlay of block boundaries would not be achieved.

Encoding the video using the same block boundaries and pixel clock as were originally used in a prior encoding step ensures that the block boundaries are not encoded as image data. Instead, they are artefacts that are propagated but not exacerbated during successive encoding stages. As a result, the encoding of each block will involve predominantly the same frequency components as were used in prior encoding stages. This would not have been possible if the location of the block boundary grid was approximate, where block boundaries would be encoded as image data. As a consequence, it is unlikely that the same level of compression would be achievable. Therefore, the size of a file corresponding to each image would be increasing in size as the image propagates through the whole system, or, where bandwidth is limited, the level of compression as the image propagates through the whole system would steadily have to increase to fit into the limited available bandwidth, the quality of the image therefore deteriorating between source and target.

It may be noted that MPEG-4 standards allow the block size to vary within a single image, according to the properties of each region within the image. These variable block sizes sit on top of the original MPEG block structure in a form of "quad tree". BED 300 in such an embodiment may be adapted to identify variable size blocks. Alternatively, BED 300 may just be arranged to identify the smallest block structure within the image and align the pixels to the by means of a clock. The encoder which follows BED 300 can then, if it is an MPEG-4 or similar encoder, impose a similar block structure, by virtue of its own analysis.

As a further embodiment, for motion video, it is possible to determine the Group Of Pictures (GOP) structure from the input signal as to whether each image being analysed was encoded as an I-Frame, B-Frame or P-Frame. Unlike operating stand-alone as in the embodiment of Figure 6, in this embodiment the block-based encoder feeds parameters back to the Boundary Edge Detector BED 300 to supplement the analysis of each image.

The parameters used to differentiate between the different frames is as follows: I-Frames will generally be better quality than P-Frames, which in turn will generally be better than B-Frames. I-Frames generally contain a higher quantity of high frequency content than P-Frames or B-Frames. I-Frames often occur at regular intervals within a GOP sequence, therefore there will be a detectable drop in the block noise at this frequency, and an increase in high frequency image content.

Digitised audio data (PCM) would be processed in very similar fashion. An audio signal would be digitised at the appropriate rate (either fixed, or modified in the same manner as for video processing, described above), and the stream stored in a single dimension array. Analysis would be performed on the stored data to derive block boundary artefacts, and the appropriately aligned data passed to the audio encoder for subsequent encoding.

The other frames can be detected by searching for motion-attributed artefacts that exist in B-Frames or P-Frames, but not in I-Frames. For example, image tearing may be prevalent, where discontinuity exists within moving objects.

The quantity of block noise in each frame is measured by the Boundary Edge Detector BED 300, the frequency content of each frame can be derived by analysing the DCT coefficients produced by the encoder's DCT 320, and motion attributes are derived by analysis of the pattern of block noise in a region of interest, analysing a portion of the image itself to search for disjointed objects or by analysing the motion data within the encoder motion compensator MC 380 and/or motion engine ME 390. These attributes are analysed by the improved encoder against each frame, and used to derive a pattern that relates to the GOP sequence.

The derived GOP sequence is then used to set the GOP sequence for the encoding, or at least as a reference to influence the GOP sequence (for example, synchronise every 12^{th} I-Frame, and allow the device that is controlling the encoder to select the rest of the GOP sequence).

The skilled reader will appreciate that numerous variations are possible within the scope of the appended claims. Accordingly it will be understood that the embodiments illustrated herein are presented as examples to aid understanding, and are not intended to be limiting on the scope of the invention claimed.

## Claims

1. A method of encoding of data received from a source (100, 105, 140), wherein the encoding is of a type which imposes a structure (200, 210, 220, 230) on the data, which structure is not defined in the data as received, the method comprising the steps of:-
- analysing (300) the received data to detect artefacts contained within the data indicating that the data has been through a previous encoding and decoding process (105, 110, 140) of the same type;
- extracting by analysis of said artefacts information as to the structure imposed on the data by said previous encoding process;
- encoding the received data while referring to the extracted structure information so as to align at least some features of the structure imposed by the encoding being performed with those imposed by the previous encoding structure.

2. The method as claimed in claim 1, wherein the received data represents an image (IV), such as an image received through an analogue transmission (120) or storage (160) process, the structure (200, 210, 220, 230) imposed by the encoding process including a spatial structure in which pixels of the image are processed in blocks, the encoding being performed so as to align block boundaries of the encoding process substantially with block boundary artefacts present in the received image data as a consequence of the previous encoding process.

3. The method as claimed in claim 2, wherein the encoding process is of a type which imposes a spatial structure in which the blocks of pixels are grouped into macroblocks, the encoding being performed so as to align macroblock boundaries of the encoding process substantially with macroblock boundary artefacts present in the received image data as a consequence of the previous encoding process.

4. The method as claimed in claim 2 or 3, wherein the received image data is a motion picture sequence of images and the structure information used for each successive image is derived entirely by analysis (300) of at least one of the previous and present images.

5. The method as claimed in any of preceding claims 2-4, wherein the received image data is over-sampled when initially digitised (600) from an analogue signal.

6. The method as claimed in any preceding claim, wherein the encoding being performed so as to apply substantially the same GOP structure to the sequence as was applied in the previous encoding process.

7. The method as claimed in any of claims 1 to 5, wherein the received image data represents a motion picture sequence, the structure imposed by the encoding process is a temporal GOP structure in which different images of the sequence are processed differently, the encoding being performed so as to apply a GOP structure different to, but temporally associated with, that used in the previous ending process.

8. The method as claimed in claims 6 or 7, wherein the analysis of artefacts distinguishes between intra- and inter-coded pictures.

9. The method as claimed in any of claims 6, 7 or 8, wherein the analysis of GOP structure is performed by analysing several images stored in full in a memory (610, 620).

10. The method as claimed in any of claims 6, 7 and 8, wherein the analysis of artefacts is performed by preserving only parameters of past images, as opposed to storing them in full, and analysing the present image with respect to those parameters.

11. The method as claimed in any preceding claim, wherein the received data comprises audio data, the structure imposed by the encoding process including a temporal structure in which samples of an audio signal are processed in blocks, each representing a short time interval, the encoding being performed so as to maximise alignment of block boundaries of the encoding process substantially with block boundary artefacts present in the received audio data as a consequence of the previous encoding process.

12. The method as claimed in claim 11, wherein the existence and position of artefacts within audio data are detected on an on-going basis and the encoding step is adapted on an on-going basis to maximise alignment of the block boundaries over time.

13. The method as claimed in claim 11 or 12, wherein the analysis step includes a phase-locked loop PLL process which is attuned to detect and then lock on to block boundary artefacts in a continuous data stream.

14. The method as claimed in claim 13, wherein the encoding step includes a second process for maximising alignment of the block boundaries of the encoding process with the detected block boundary artefacts gradually over time, to avoid sudden discontinuities in the block structure imposed by the encoding step.

15. An apparatus for encoding data adapted to implement the method according to the invention as claimed in any preceding claim.

16. An apparatus as claimed in claim 15 comprising a digital video recorder or digital audio recorder.

17. A method of pre-processing data received from a source (100, 105, 140), for subsequent application to an encoding process which imposes a predetermined structure (200, 210, 220, 230) on the data, which structure is not defined in the data as received, the method comprising the steps of:-
- analysing (300) the received data to detect artefacts contained within the data indicating that the data has been through a previous encoding process of imposing a structure having features in common with said predetermined structure;
- extracting by analysis of said artefacts information as to the structure imposed on the data by said previous encoding process;
- processing (630) the received data while referring to the extracted structure information so as to align at least some features between the structure imposed by the previous encoding process and said predetermined structure.

18. A computer program product comprising instructions for causing a programmable computer to implement the specific method steps of the invention in any of its aspects as claimed in any of claims 1-14 and 17.

## Patentansprüche

1. Verfahren zum Codieren von Daten, die von einer Quelle (100, 105, 140) empfangen worden sind, wobei die Codierung von einem Typ ist, die den Daten eine Struktur (200, 210, 220, 230) auferlegt, wobei diese Struktur nicht in den Daten, wie diese empfangen werden, definiert ist, wobei das Verfahren die nachfolgenden Verfahrensschritte umfasst:
- das Analysieren (300) der empfangenen Daten zum Detektieren von Artefakten innerhalb der Daten, die angeben, dass die Daten durch einen vorhergehenden Codierungs- und Decodierungsprozess (105, 110, 140) von demselben Typ sind,
- das Extrahieren durch Analyse der genannten Artefakte-Information in Bezug auf die den Daten durch den genannten vorhergehenden Codierungsprozess auferlegte Struktur,
- das Codieren der empfangenen Daten unter Bezugnahme der extrahierten Strukturinformation in Bezug auf die Ausrichtung wenigstens einiger Merkmale der durch die Codierung auferlegten Struktur, durchgeführt an denen, die durch die vorhergehende Codierungsstruktur auferlegt worden sind.

2. Verfahren nach Anspruch 1, wobei die empfangenen Daten ein Bild (IV) darstellen, wie ein Bild, empfangen in einem analogen Übertragungs- (120) oder Speicherungsprozess (160), wobei die von dem Codierungsprozess auferlegte Struktur (200, 210, 220, 230) eine räumliche Struktur aufweist, in der Pixel des Bildes blockweise verarbeitet werden, wobei die Codierung derart durchgeführt wird, dass Blockbegrenzungen des Codierungsprozesses im Wesentlichen mit Blockbegrenzungsartefakten in den empfangenen Bilddaten als eine Folge des vorhergehenden Codierungsprozesses ausgerichtet werden.

3. Verfahren nach Anspruch 2, wobei der Codierungsprozess von einem Typ ist, der eine räumliche Struktur auferlegt, in der die Pixelblöcke in Makroblöcken gruppiert sind, wobei die Codierung derart durchgeführt wird, dass Makroblockgrenzen des Codierungsprozesses im Wesentlichen mit Makroblockgrenzenartefakten in den empfangenen Bilddaten als eine Folge des vorhergehenden Codierungsprozesses ausgerichtet werden.

4. Verfahren nach Anspruch 2 oder 3, wobei die empfangenen Bilddaten eine Filmsequenz von Bildern sind und die Strukturinformation, die für jedes nachfolgende Bild verwendet wird, völlig durch Analyse (300) wenigstens eines der vorhergehenden und aktuellen Bilder hergeleitet wird.

5. Verfahren nach einem der vorstehenden Ansprüche 2 bis 4, wobei die empfangenen Bilddaten überabgetastet werden, wenn sie zuerst aus einem analogen Signal digitalisiert (600) werden.

6. Verfahren nach einem der vorstehenden Ansprüche, wobei die Codierung derart durchgeführt wird, dass im Wesentlichen dieselbe GOP-Struktur auf die Sequenz angewandt wird, die auch in dem vorhergehenden Codierungsprozess angewandt wurde.

7. Verfahren nach einem der Ansprüche 1 bis 5, wobei die empfangenen Bilddaten eine Filmsequenz darstellen, wobei die von dem Codierungsprozess auferlegte Struktur eine zeitliche GOP-Struktur ist, in der verschiedene Bilder der Sequenz verschiedenartig verarbeitet werden, wobei die Codierung derart durchgeführt wird, dass eine GOP-Struktur angewandt wird, die anders ist aber zeitlich assoziiert ist mit derjenigen, die in dem vorhergehenden Codierungsprozess angewandt wurde.

8. Verfahren nach Anspruch 6 oder 7, wobei die Analyse von Artefakten zwischen intra- und inter-codierten Bilder unterscheidet.

9. Verfahren nach einem der Ansprüche 6, 7 oder 8, wobei die Analyse der GOP-Struktur dadurch durchgeführt wird, dass verschiedene Bilder analysiert werden, die völlig in einem Speicher (610, 620) gespeichert sind.

10. Verfahren nach einem der Ansprüche 6, 7 oder 8, wobei die Analyse von Artefakten durch Aufbewahren von nur Parametern vergangener Bilder durchgeführt wird, stattdessen, dass sie komplett gespeichert werden, und durch Analyse des aktuellen Bildes in Bezug auf diese Parameter.

11. Verfahren nach einem der vorstehenden Ansprüche, wobei die empfangenen Daten Audiodaten enthalten, wobei die von dem Codierungsprozess auferlegte Struktur eine zeitliche Struktur umfasst, in der Abtastwerte eines Audiosignals in Blöcken verarbeitet werden, die je ein Kurzzeitintervall darstellen, wobei die Codierung derart durchgeführt wird, dass die Ausrichtung von Blockgrenzen des Codierungsprozesses im Wesentlichen mit Blockbegrenzungsartefakten in den empfangenen Audiodaten als eine Folge des vorhergehenden Codierungsprozesses maximiert wird.

12. Verfahren nach Anspruch 11, wobei das Vorhandensein und die Lage von Artefakten innerhalb von Audiodaten auf einer laufenden Basis detektiert werden und der Codierungsschritt an eine laufende Basis angepasst wird um die Ausrichtung der Blockbegrenzungen mit der Zeit zu maximieren.

13. Verfahren nach Anspruch 11 oder 12, wobei der Analysenschritt einen phasenverriegelte Schleifenprozess (PLL) umfasst, der abgestimmt ist zum Detektieren und zum nachfolgenden Verriegeln auf Blockbegrenzungsartefakten in einem kontinuierlichen Datenstrom.

14. Verfahren nach Anspruch 13, wobei der Codierungsschritt einen zweiten Prozess umfasst um die Ausrichtung der Blockbegrenzungen des Codierungsprozesses mit den detektierten Blockbegrenzungsartefakten allmählich mit der Zeit zu maximieren um plötzliche Diskontinuitäten in der von dem Codierungsschritt auferlegten Blockstruktur zu vermeiden.

15. Anordnung zum Codieren von Daten, vorgesehen zum Implementieren des Verfahrens nach der vorliegenden Erfindung nach einem der vorstehenden Ansprüche.

16. Anordnung nach Anspruch 15, mit einem digitalen Videorecorder oder einem digitalen Audiorecorder.

17. Verfahren zum Vorbearbeiten von Daten, empfangen von einer Quelle (100, 105, 140), zur nachfolgenden Anwendung in einem Codierungsprozess, der den Daten eine vorbestimmte Struktur (200, 210, 220, 230) auferlegt, wobei diese Struktur nicht in den Daten, wie diese empfangen werden, definiert wird, wobei das Verfahren die nachfolgenden Verfahrensschritte umfasst:
- das Analysieren (300) der empfangenen Daten zum Detektieren von Artefakten innerhalb der Daten, die angeben, dass die Daten durch einen vorhergehenden Codierungs- und Decodierungsprozess der Auferlegung einer Struktur mit Merkmalen gemeinsam mit der genannten vorbestimmten Struktur von demselben Typ sind,
- das Extrahieren durch Analyse der genannten Artefakte-Information in Bezug auf die den Daten durch den genannten vorhergehenden Codierungsprozess auferlegte Struktur,
- das Verarbeiten (630) der empfangenen Daten unter Bezugnahme auf die extrahierte Strukturinformation zum Ausrichten wenigstens einiger Merkmale zwischen der von dem vorhergehenden Codierungsprozess auferlegten Struktur und der genannten vorbestimmten Struktur.

18. Computerprogrammprodukt mit Instruktionen um dafür zu sorgen, dass ein programmierbarer Computer die spezifischen Verfahrensschritte nach der vorliegenden Erfindung in jedem der Aspekte nach einem der Ansprüche 1 bis 14 und 17 implementiert.

## Revendications

1. Procédé de codage des données reçues d'une source (100, 105, 140), dans lequel le codage est d'un type qui impose une structure (200, 210, 220, 230) aux données, laquelle structure n'est pas définie dans les données telles qu'elles sont reçues, le procédé comportant les étapes de:
- analyse (300) des données reçues pour détecter les artefacts contenus dans les données indiquant que les données ont subi un traitement de codage et de décodage précédent (105, 110, 140) du même type;
- extraction par analyse de l'information desdits artefacts en ce qui concerne la structure imposée aux données par ledit traitement de codage précédent;
- codage des données reçues tout en faisant référence à l'information de structure extraite afin d'aligner au moins quelques caractéristiques de la structure imposée par le codage réalisé avec celles imposées par la structure de codage précédente.

2. Procédé selon la revendication 1, dans lequel les données reçues représentent une image (IV), telle qu'une image reçue par un traitement de transmission analogique (120) ou de stockage analogique (160), la structure (200, 210, 220, 230) imposée par le traitement de codage incluant une structure spatiale dans laquelle les pixels de l'image sont traités par bloc, le codage étant réalisé afin d'aligner les limites de bloc du traitement de codage essentiellement avec les artefacts de limite de bloc présents dans les données d'image reçues en conséquence du traitement de codage précédent.

3. Procédé selon la revendication 2, dans lequel le traitement de codage est d'un type qui impose une structure spatiale dans laquelle les blocs de pixels sont groupés en macrobloc, le codage étant réalisé afin d'aligner les limites de macrobloc du traitement de codage essentiellement avec les artefacts de limite de macrobloc présents dans les données d'image reçues en conséquence du traitement de codage précédent.

4. Procédé selon la revendication 2 ou 3, dans lequel les données d'image reçues sont une séquence d'image en mouvement d'images et dans lequel l'information de structure utilisée pour chaque image successive est entièrement obtenue par analyse (300) d'au moins une des images précédentes et présentes.

5. Procédé selon l'une quelconque des revendications précédentes 2 - 4, dans lequel les données d'image reçues sont suréchantillonnées lors de la numérisation initiale (600) d'un signal analogique.

6. Procédé selon l'une quelconque des revendications précédentes, dans lequel le codage est réalisé afin d'appliquer pratiquement la même structure de GOP à la séquence que celle qui avait été appliquée dans le traitement de codage précédent.

7. Procédé selon l'une quelconque des revendications 1 à 5, dans lequel les données d'image reçues représentent une séquence d'images en mouvement, la structure imposée par le traitement de codage est une structure de GOP temporelle dans laquelle des images différentes de la séquence sont traitées différemment, le codage étant réalisé afin d'appliquer une structure de GOP différente, mais temporairement associée à celle utilisée dans le traitement de codage précédent.

8. Procédé selon les revendications 6 ou 7, dans lequel l'analyse des artefacts distingue les images intra-codées et inter-codées.

9. Procédé selon l'une quelconque des revendications 6, 7 ou 8, dans lequel l'analyse de la structure de GOP est réalisée en analysant plusieurs images stockées entièrement dans une mémoire (610, 620).

10. Procédé selon l'une quelconque des revendications 6, 7 et 8, dans lequel l'analyse des artefacts est réalisée en préservant seulement des paramètres des images passées, contrairement à les stocker entièrement, et en analysant l'image présente par rapport à ces paramètres.

11. Procédé selon l'une quelconque des revendications précédentes, dans lequel les données reçues comportent des données audio, la structure imposée par le traitement de codage incluant une structure temporelle dans laquelle des échantillons d'un signal audio sont traités par bloc, chacun représentant un court intervalle de temps, le codage étant réalisé afin de maximiser l'alignement des limites de bloc du traitement de codage essentiellement avec les artefacts de limite de bloc présents dans les données audio reçues en conséquence du traitement de codage précédent.

12. Procédé selon la revendication 11, dans lequel l'existence et la position des artefacts dans les données audio sont détectées sur base des données en cours et dans lequel l'étape de codage est adaptée sur base des données en cours pour maximiser l'alignement des limites de bloc dans le temps.

13. Procédé selon la revendication 11 ou 12, dans lequel l'étape d'analyse inclut un traitement de boucle à verrouillage de phase PLL qui est adapté pour détecter et ensuite se verrouiller aux artefacts de limites de bloc dans un flux de données continu.

14. Procédé selon la revendication 13, dans lequel l'étape de codage inclut un deuxième traitement permettant de maximiser l'alignement des limites de bloc du traitement de codage avec les artefacts de limite de bloc détectés graduellement dans le temps, pour éviter des discontinuités soudaines dans la structure de bloc imposée par l'étape de codage.

15. Appareil de codage de données adapté pour implémenter le procédé selon l'invention selon l'une quelconque des revendications précédentes.

16. Appareil selon la revendication 15 comportant un enregistreur vidéo numérique ou un enregistreur audio numérique.

17. Procédé de prétraitement des données reçues d'une source (100, 105, 140), pour une application ultérieure à un traitement de codage qui impose une structure prédéterminée (200, 210, 220, 230) aux données, laquelle structure n'est pas définie dans les données telles qu'elles sont reçues, le procédé comportant les étapes de:
- analyse (300) des données reçues pour détecter les artefacts contenus dans les données indiquant que les données ont subi un traitement de codage précédent imposant une structure ayant des caractéristiques en commun avec ladite structure prédéterminée;
- extraction par analyse de l'information desdits artefacts en ce qui concerne la structure imposée aux données par ledit traitement de codage précédent;
- traitement (630) des données reçues tout en faisant référence à l'information de structure extraite afin d'aligner au moins quelques caractéristiques entre la structure imposée par le traitement de codage précédent et ladite structure prédéterminée.

18. Produit-programme informatique comportant des instructions permettant de faire en sorte qu'un ordinateur programmable implémente les étapes spécifiques du procédé de l'invention dans l'un quelconque de ses aspects selon l'une quelconque des revendications 1-14 et 17.
